(19) **Europäisches Patentamt**
**European Patent Office**
**Office européen des brevets**

(11) **EP 3 853 525 B1**

(12) **FASCICULE DE BREVET EUROPEEN**

(45) Date de publication et mention
de la délivrance du brevet:
**26.07.2023 Bulletin 2023/30**

(21) Numéro de dépôt: **19772676.3**

(22) Date de dépôt: **13.09.2019**

(51) Classification Internationale des Brevets (IPC):
**F23C 10/00** *(2006.01)*   **F23C 10/10** *(2006.01)*
**F23C 99/00** *(2006.01)*   **F23C 10/24** *(2006.01)*

(52) Classification Coopérative des Brevets (CPC):
**F23C 10/005; F23C 10/10; F23C 10/24;**
**F23C 99/00;** F23C 2206/10; F23C 2900/99008;
F23J 2217/60; Y02E 20/34

(86) Numéro de dépôt international:
**PCT/EP2019/074583**

(87) Numéro de publication internationale:
**WO 2020/058141 (26.03.2020 Gazette 2020/13)**

(54) **DISPOSITIF ET PROCEDE DE COMBUSTION EN BOUCLE CHIMIQUE AVEC SEPARATEUR DE PARTICULES MUNI D'UNE CONDUITE D'ADMISSION INCLINEE**

VORRICHTUNG UND VERFAHREN ZUR CHEMICAL-LOOPING-VERBRENNUNG MIT EINEM PARTIKELABSCHEIDER MIT GENEIGTEM EINLASSKANAL

DEVICE AND METHOD FOR CHEMICAL LOOPING COMBUSTION, HAVING A PARTICLE SEPARATOR PROVIDED WITH AN INCLINED INTAKE DUCT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.09.2018 FR 1858511**

(43) Date de publication de la demande:
**28.07.2021 Bulletin 2021/30**

(73) Titulaires:
• **IFP Energies nouvelles**
  **92852 Rueil-Malmaison Cedex (FR)**
• **TotalEnergies OneTech**
  **92400 Courbevoie (FR)**

(72) Inventeurs:
• **TILLAND, Airy**
  **92852 RUEIL-MALMAISON CEDEX (FR)**
• **AMBLARD, Benjamin**
  **92852 RUEIL-MALMAISON CEDEX (FR)**
• **TEBIANIAN, Sina**
  **92852 RUEIL-MALMAISON CEDEX (FR)**
• **CLOUPET, Ann**
  **92852 RUEIL-MALMAISON CEDEX (FR)**
• **GUILLOU, Florent**
  **92852 RUEIL-MALMAISON CEDEX (FR)**
• **BERTHOLIN, Stephane**
  **92852 RUEIL-MALMAISON CEDEX (FR)**
• **YAZDANPANAH, Mahdi**
  **76600 LE HAVRE (FR)**

(74) Mandataire: **IFP Energies nouvelles
Département Propriété Industrielle
Rond Point de l'échangeur de Solaize
BP3
69360 Solaize (FR)**

(56) Documents cités:
**CN-U- 202 546 743     FR-A1- 2 960 940**
**FR-A1- 2 960 941**

**Description**

La présente invention concerne le domaine de la séparation de particules, et plus précisément de particules d'oxydes métalliques, d'une part, et de particules d'imbrûlés associées éventuellement à des cendres volantes, d'autre part, dans le contexte de la combustion en boucle chimique pour produire de l'énergie, du gaz de synthèse et/ou de l'hydrogène.

La combustion en boucle chimique (en abréviation CLC pour Chemical Looping Combustion) consiste à mettre en contact, dans une enceinte à haute température, une charge hydrocarbonée gazeuse, liquide et/ou solide avec un solide de type oxyde métallique et porteur d'oxygène. L'oxyde métallique cède une partie de l'oxygène qu'il renferme, celui-ci participant à la combustion des hydrocarbures.

A l'issue de la combustion, les fumées contiennent majoritairement des oxydes de carbone, de l'eau et éventuellement de l'hydrogène. En effet, il n'est pas nécessaire de mettre en contact la charge hydrocarbonée avec de l'air. Les fumées sont donc majoritairement composées des gaz de combustion, et éventuellement d'un gaz de dilution servant au transport et à la fluidisation des particules ou un gaz (par exemple de la vapeur d'eau) favorisant la gazéification de combustible solide.

Ainsi, il est possible de produire, après condensation, des fumées exemptes majoritairement d'azote et contenant des teneurs en dioxyde de carbone $CO_2$ élevées (généralement supérieures à 90% vol., voire 98%) permettant d'envisager le captage, puis le stockage de $CO_2$. L'oxyde métallique ayant participé à la combustion est ensuite transporté vers une autre enceinte réactionnelle où il est mis en contact avec de l'air ou un autre gaz oxydant pour être réoxydé.

La mise en oeuvre d'un procédé de combustion en boucle chimique requiert des quantités d'oxydes métalliques importantes pour brûler la totalité du combustible. Ces oxydes métalliques sont généralement contenus, soit dans des particules de minerai, soit dans des particules résultant de traitement industriels (résidus de l'industrie sidérurgique ou minière, catalyseurs usagés de l'industrie chimique ou du raffinage). On peut également utiliser des matériaux synthétiques, tels que par exemple des supports d'alumine ou de silice-alumine sur lesquels des métaux pouvant être oxydés auront été déposés (nickel par exemple). La capacité maximale d'oxygène réellement disponible varie considérablement d'un oxyde à l'autre, et est généralement comprise entre 0,1 et 15%, et souvent entre 0,3 et 6% poids. La mise en oeuvre en lit fluidisé est de ce fait particulièrement avantageuse pour conduire la combustion. En effet, les particules d'oxydes finement divisées circulent plus facilement dans les enceintes réactionnelles de combustion et d'oxydation, ainsi qu'entre ces enceintes, si l'on confère aux particules les propriétés d'un fluide.

La demande de brevet FR 2 850 156 décrit un procédé de combustion en boucle chimique pour lequel le combustible solide est broyé avant l'entrée dans le réacteur de réduction fonctionnant en lit fluidisé circulant. La taille réduite des particules de combustible solide permet une combustion plus complète et plus rapide. La séparation en aval du lit circulant est d'abord assurée par un cyclone puis par un dispositif permettant de séparer les particules d'imbrûlés des particules d'oxyde métallique. Ainsi, on évite l'entraînement d'imbrûlés dans la zone d'oxydation et donc les émissions de $CO_2$ dans les effluents du réacteur d'oxydation.

Le séparateur de particules est fluidisé par de la vapeur d'eau, qui permet de séparer les particules fines et légères, telles que le résidu carboné, et de réintroduire ce dernier dans le réacteur, tandis que les particules plus denses et plus grosses d'oxydes sont transférées vers le réacteur d'oxydation.

La demande de brevet FR 2 896 709 a pour objet un séparateur de particules fonctionnant dans un procédé en boucle chimique. Ce séparateur est alimenté par le flux de particules transportant l'oxygène mélangées au combustible solide. Dans le séparateur, les particules s'écoulent en phase dense en suivant un chemin tortueux et en passant au travers de chicanes, ce qui permet de contrôler le temps de séjour et de favoriser la séparation des particules légères (particules d'imbrûlés) des particules lourdes (oxydes métalliques). Les particules sont ensuite introduites dans une zone de fluidisation, ladite fluidisation étant contrôlée par des moyens situés à la base du séparateur mais aussi en paroi des déflecteurs, ce qui permet d'entraîner les particules les plus légères qui sont ensuite recyclées vers le réacteur de fluidisation.

Le fonctionnement du séparateur selon la demande de brevet FR 2 896 709 induit plusieurs inconvénients non négligeables.

Ainsi, l'efficacité de séparation est réduite compte tenu d'une limitation au niveau de la capacité d'entraînement des particules dans la phase gazeuse. En effet, pour entraîner des quantités de particules importantes, il faut mettre en oeuvre des quantités de gaz ainsi que des sections libres importantes.

De plus, en phase dense, il est impossible de séparer totalement deux phases solides différentes. En effet, le mouvement ascendant des bulles de gaz provoque paradoxalement une redescente des particules légères vers la phase dense et empêche une séparation totale.

En outre, la géométrie du séparateur de FR 2 896 709 est très compliquée de par la présence d'internes, notamment des internes asymétriques. Cette géométrie est problématique compte tenu des contraintes mécaniques que subissent les matériaux constituant le séparateur dans les conditions de température du procédé CLC, généralement au-delà de 800°C. En effet, si les parois externes sont souvent protégées par un ciment réfractaire et restent à basse température, ce n'est pas le cas des parois internes qui sont portées aux conditions du procédé.

Pour pallier ces inconvénients, la demande de brevet FR 2 960 941 (WO 2011/151537) concerne un séparateur de particules dans lequel le mélange de particules provenant de la zone de combustion est mis au contact d'un flux gazeux provenant de la zone de combustion et/ou d'une source gazeuse externe. Ce mélange entre ensuite dans la phase diluée du séparateur de particules. Dans le séparateur de particules, la vitesse de l'écoulement gazeux est contrôlée de façon à permettre la sédimentation des particules les plus lourdes (essentiellement des particules d'oxydes métalliques), les particules les plus légères (essentiellement des particules d'imbrûlés) étant entraînées vers la partie supérieure du séparateur de particules pour être recyclées vers la zone de combustion.

Ce type de séparateur de particules donne satisfaction du fait notamment d'une séparation efficace des particules. Néanmoins, il est souhaitable de rendre plus homogène la distribution du flux de particules dans le séparateur, de manière à optimiser les performances du séparateur de particules.

Dans ce but, la présente invention concerne un dispositif et un procédé de combustion en boucle chimique tel que décrit dans la demande de brevet FR 2 960 941 (WO 2011/151537), pour lequel l'extrémité de la conduite d'admission débouchant au sein de l'enceinte du séparateur est inclinée par rapport à un plan horizontal. Cette inclinaison de l'extrémité d'admission permet une admission selon une direction partiellement latérale (c'est-à-dire avec une composante horizontale), ce qui permet une distribution plus homogène du flux de particules dans le séparateur de particules. Ainsi, les performances du séparateur de particules sont améliorées, notamment en termes de séparation des particules, et il est possible de réduire la hauteur du séparateur de particules, et par conséquent de limiter le coût de celui-ci, et a fortiori d'améliorer les performances et de réduire les coûts du dispositif et du procédé de combustion en boucle chimique.

**Le dispositif et le procédé selon l'invention**

L'invention concerne un dispositif de combustion en boucle chimique utilisant un combustible solide générant des particules d'imbrûlés et mettant en oeuvre des particules de porteur d'oxygène, telles que des oxydes métalliques, et comportant au moins une zone de combustion, un séparateur de particules contenues dans un mélange gazeux provenant de ladite zone de combustion, et un séparateur gaz-solide, ledit séparateur de particules comprenant une enceinte munie d'au moins une conduite d'admission reliée à ladite zone de combustion, au moins une conduite d'évacuation située en partie inférieure de ladite enceinte et au moins une conduite de sortie située en partie supérieure de ladite enceinte et reliée audit séparateur gaz-solide, ladite enceinte étant apte à comprendre une phase dense en partie inférieure et une phase diluée en partie supérieure. Ladite conduite d'admission comprend successivement, dans la direction de l'admission, une portion verticale (19), un coude (20) et une extrémité d'admission inclinée (21), ladite extrémité d'admission (21) étant inclinée d'un angle $\alpha$ par rapport à un plan horizontal (H) et , ladite débouchant au sein de ladite enceinte.

Selon un mode de réalisation, ledit angle $\alpha$ est compris entre 10 et 70°, de préférence entre 30 et 50°.

De préférence, ladite portion verticale de ladite conduite d'admission est à une distance D du centre de ladite enceinte strictement positive et inférieure à 4A, de préférence inférieure à 2A et de manière préférée inférieure à 1,5 A, A étant une dimension entre le centre de ladite enceinte et une paroi latérale de ladite enceinte.

Conformément à une mise en oeuvre, le diamètre C de ladite extrémité d'admission inclinée est compris entre 0,5 et 4L, de préférence entre 1L et 3L, de manière préférée entre 1L et 2 L, L étant le diamètre de ladite portion verticale de ladite conduite d'admission.

Selon un aspect, ladite conduite d'admission est entièrement externe à ladite enceinte, l'extrémité d'admission débouchant sur une paroi latérale de ladite enceinte.

Alternativement, ladite conduite d'admission est au moins partiellement interne à ladite enceinte, ladite conduite d'admission traversant la paroi inférieure de ladite enceinte.

De manière avantageuse, ledit séparateur de particules comprend entre 1 et 20, de préférence entre 1 et 10, et de manière préférée entre 1 et 4 conduites d'admission.

Conformément à un mode de réalisation, ladite conduite d'admission débouche dans ladite enceinte dans la partie supérieure de ladite enceinte étant apte à comprendre ladite phase diluée.

Selon une caractéristique, l'inclinaison de ladite extrémité d'admission de ladite conduite d'admission est dirigée vers l'axe longitudinal de ladite enceinte.

En outre, l'invention concerne un procédé de combustion en boucle chimique utilisant un combustible solide générant des particules d'imbrulés, mettant en oeuvre des particules de porteur d'oxygène, telles que des oxydes métalliques, et mettant en oeuvre un dispositif de combustion en boucle chimique selon l'une des caractéristiques précédentes. Pour ce procédé, on met en oeuvre les étapes suivantes :

a) on admet un mélange gazeux provenant de ladite zone de combustion, comprenant des particules et des gaz de combustion, dans l'enceinte dudit séparateur de particules au moyen d'au moins une conduite d'admission ;
b) on extrait les particules les plus légères constituées majoritairement des particules d'imbrûlés par une sortie en partie supérieure de ladite enceinte et on évacue les particules les plus lourdes constituées majoritairement des particules de porteur d'oxygène par ladite conduite d'évacuation en partie inférieure de ladite enceinte ;

c) on envoie un flux gazeux comportant les particules légères d'imbrûlés extraites par ladite conduite de sortie en partie supérieure de l'enceinte vers ledit séparateur gaz-solide ;

d) on évacue dudit séparateur gaz-solide un gaz appauvri en particules d'imbrûlés par une conduite ; et

e) on recycle les particules d'imbrûlés séparées dans ledit séparateur gaz-solide vers ladite zone de combustion par une conduite de communication, procédé dans leque

ladite conduite d'admission comprend successivement, dans la direction de l'admission, une portion verticale, un coude et une extrémité d'admission inclinée, ladite une extrémité d'admission étant inclinée d'un angle $\alpha$ par rapport à un plan horizontal et, ladite extrémité d'admission débouchant au sein de ladite enceinte.

## Présentation succincte des figures

D'autres caractéristiques et avantages du procédé et du dispositif selon l'invention, apparaîtront à la lecture de la description ci-après d'exemples non limitatifs de réalisations, en se référant aux figures annexées et décrites ci-après.

La figure 1 illustre le dispositif et le procédé de combustion en boucle chimique selon un mode de réalisation de l'invention.

Les figures 2a à 2d illustrent la conduite d'admission du séparateur de particules selon quatre modes de réalisation de l'invention.

La figure 3 illustre un séparateur de particules selon un mode de réalisation de l'invention.

La figure 4 illustre, en vue de dessus, un séparateur de particules selon le mode de réalisation de l'invention de la figure 3.

Les figures 5a, 5b et 5c illustrent une comparaison de distribution de vitesse dans un séparateur, pour deux réalisations selon l'art antérieur (figures 5a et 5b), et une réalisation selon une variante de l'invention (figure 5c).

## Description détaillée de l'invention

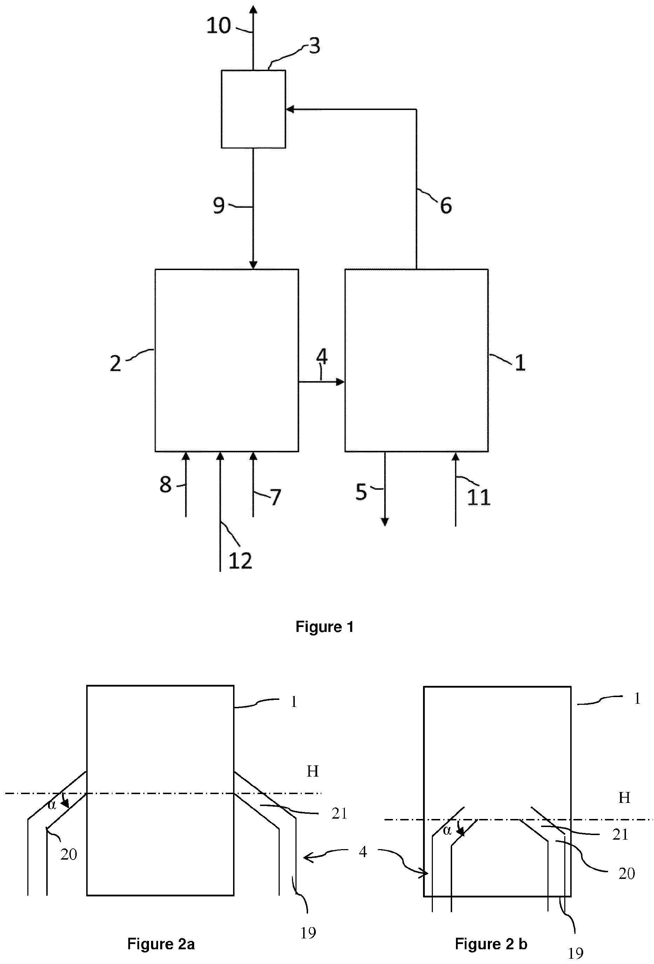

La figure 1 décrit, schématiquement et de manière non limitative, le dispositif et le procédé de combustion en boucle chimique selon un mode de réalisation de l'invention.

La zone 2 représente la zone de combustion d'un procédé de combustion en boucle chimique (CLC : abréviation pour le groupe de mots anglais Chemical Looping Combustion) dans laquelle sont introduits une charge solide par une conduite 7, des particules de porteur d'oxygène par une conduite 8 provenant de la zone d'oxydation (non représentée) du procédé CLC et un gaz de fluidisation amené par une conduite 12 tel que, par exemple, de la vapeur d'eau ou du $CO_2$ pour favoriser la fluidisation des particules d'oxydes.

La charge (ou combustible) solide traitée dans la zone de combustion est généralement constituée d'une source solide hydrocarbonée contenant majoritairement du carbone et de l'hydrogène. La charge est avantageusement choisie parmi le charbon, le coke, le pet-coke, la biomasse, les sables bitumineux et les déchets ménagers.

Cette zone de combustion 2 peut fonctionner dans un lit fluidisé en phase dense ou en lit fluidisé circulant ou bien encore selon un agencement de lits constitués d'une phase dense et d'une phase de transport.

De manière avantageuse, la vitesse du gaz dans la partie supérieure de la zone de combustion est comprise entre 1 et 10 m/s.

Un flux de particules contenant des particules d'oxydes métalliques, dites particules lourdes, et des particules légères comprenant des particules d'imbrûlés et éventuellement des cendres volantes, le tout dans un flux gazeux, est extrait de la zone de combustion 2 pour être est ensuite introduit dans un séparateur de particules 1 par au moins une conduite d'admission 4.

Le flux gazeux provient totalement ou en partie de la zone de combustion 2 et est majoritairement constitué de CO, $CO_2$, $H_2$ et $H_2O$, le complément pouvant provenir d'une source extérieure contenant par exemple du $CO_2$ recyclé et/ou de la vapeur d'eau, introduite par le conduit 11 en partie inférieure du séparateur 1.

De manière préférée, on utilise tous les effluents gazeux de combustion pour la séparation de particules et de manière très préférée, le flux gazeux total dans le séparateur 1 peut être constitué par au moins 60% des effluents de la zone de combustion. La séparation entre les particules lourdes et les particules légères a lieu dans ce séparateur de particules 1, les particules lourdes se déposant dans la partie inférieure du séparateur de particules avant d'en être extraites par une conduite d'évacuation 5, et les particules légères étant entraînées vers la partie supérieure avant d'être extraites par une conduite de sortie 6 puis d'être introduites dans un séparateur gaz-solide 3, par exemple un cyclone.

Ce cyclone 3 a pour but de séparer le gaz appauvri en particules d'imbrûlés qui est ensuite extrait par une conduite 10 et les particules d'imbrûlés entraînées avec les particules d'oxydes métalliques extraites par une conduite 9 et recyclées vers la zone de combustion 2.

Les particules lourdes extraites en partie inférieure du séparateur de particules 1 sont constituées majoritairement d'oxydes métalliques et peuvent être envoyées vers une seconde zone de combustion dans laquelle le porteur d'oxygène sera plus réduit, ou vers une zone d'oxydation permettant au porteur d'oxygène de retrouver au moins une partie du degré d'oxydation qu'il avait à l'entrée de la zone de combustion 2 et les particules d'imbrûlés plus légères sont recyclées vers la zone de combustion, après séparation de l'effluent gazeux.

Ainsi, comme décrit dans la demande de brevet FR 2 960 941 (WO 2011/151537), les paramètres d'admission et d'évacuation/sortie sont choisis pour créer dans l'enceinte du séparateur de particules 1 une phase dense en partie inférieure de l'enceinte du séparateur de particules et une phase diluée en partie supérieure de l'enceinte du séparateur de particules, et la conduite d'admission 4 débouche de préférence dans la phase diluée.

Les particules qui sédimentent dans la partie inférieure forment une phase dense constituée des particules les plus lourdes, de hauteur plus ou moins importante dans le séparateur en fonction, entre autres, de la densité des particules, des débits d'alimentation et d'extraction mais le niveau de ladite phase dense, formant l'interface avec la phase diluée, est de préférence situé en dessous de l'admission 4 débouchant dans le séparateur permettant l'introduction du mélange de particules extrait de la zone de combustion.

La présente invention concerne en particulier le séparateur de particules. Selon l'invention, le séparateur de particules du dispositif de combustion en boucle chimique comporte :

- une enceinte, dans laquelle est réalisée la séparation des particules, l'enceinte étant apte à comporter une phase dense dans sa partie inférieure, et une phase diluée dans sa partie supérieure, la séparation des particules étant réalisée par élutriation,
- au moins une conduite d'admission, reliée à ladite zone de combustion, pour transférer le flux issu de la zone de combustion vers l'enceinte du séparateur de particules, la conduite d'admission comprenant successivement, dans la direction de l'admission, une portion verticale, un coude et une extrémité d'admission inclinée, ladite une extrémité d'admission étant inclinée d'un angle $\alpha$ par rapport à un plan horizontal et, ladite extrémité d'admission débouchant au sein de ladite enceinte,
- au moins une conduite d'évacuation située en partie inférieure de l'enceinte, pour évacuer les particules lourdes, et
- au moins une conduite de sortie située en partie supérieure de l'enceinte pour évacuer les particules légères et le gaz.

Dans la présente description, on entend par enceinte comportant une phase dense dans sa partie inférieure et une phase diluée dans sa partie supérieure, une enceinte apte à comprendre une phase dense dans sa partie inférieure et une phase diluée dans sa partie supérieure lorsque le séparateur n'est pas en fonctionnement. En fonctionnement, l'enceinte comporte effectivement une phase dense dans sa partie inférieure et une phase diluée dans sa partie supérieure.

Selon l'invention, la conduite d'admission comprend une extrémité d'admission inclinée (d'un angle $\alpha$) par rapport à un plan horizontal. L'extrémité d'admission est l'extrémité de la conduite d'admission qui débouche dans l'enceinte du séparateur de particules. L'extrémité d'admission est dite inclinée car elle n'est ni verticale, ni horizontale. En d'autres termes l'angle $\alpha$ est compris entre 1 et 89°. L'inclinaison de l'extrémité d'admission permet l'admission du flux selon une direction qui comporte une composante latérale (c'est-à-dire horizontale). Cette inclinaison du flux permet une distribution homogène sur la section de l'enceinte, permettant ainsi une amélioration des performances du séparateur de particules (séparation améliorée et coût réduit).

Selon un mode de réalisation de l'invention, l'angle $\alpha$ peut être compris entre 10 et 70°, de préférence entre 30 et 50°. Ces plages angulaires d'inclinaison de l'extrémité d'admission permettent une distribution optimisée, en évitant une admission trop horizontale qui risquerait un entraînement vers le bas du flux, et en évitant une admission trop verticale qui risquerait une admission sous forme de jet similaire à l'effet de l'art antérieur décrit notamment dans la demande de brevet FR 2 960 941 (WO 2011/151537). De plus, ces plages angulaires permettent de limiter les effets d'érosion de la conduite d'admission, qui pourrait exister en cas d'angle $\alpha$ trop faible.

De manière préférée, l'extrémité d'admission inclinée peut être dirigée vers le centre de l'enceinte (ou son axe longitudinal), pour favoriser la séparation.

De plus, l'extrémité d'admission inclinée peut être dirigée vers la partie supérieure de l'enceinte, pour entraîner les particules vers la partie supérieure de l'enceinte.

Conformément à l'invention, la conduite d'admission comprend successivement, dans la direction de l'admission une portion verticale, un coude et l'extrémité d'admission inclinée. Une telle conception de la conduite d'admission permet une fabrication simple de la conduite d'admission.

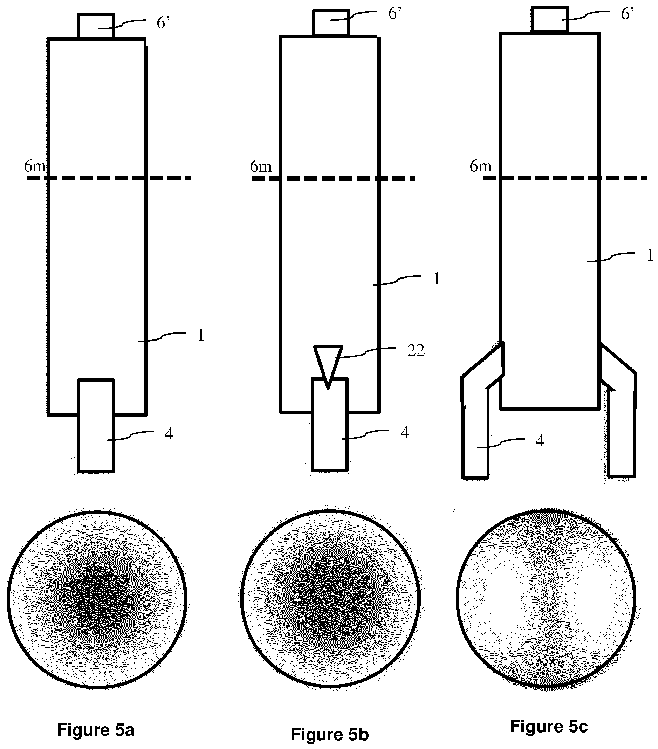

Selon un mode préféré de réalisation de l'invention, la conduite d'admission peut être entièrement externe à l'enceinte. Dans ce cas, l'extrémité d'admission débouche sur une paroi latérale de l'enceinte. Ce mode de réalisation permet de limiter les internes dans l'enceinte, en effet aucun élément de la conduite d'admission ne traverse une paroi de l'enceinte. En outre, ce mode de réalisation permet de se passer des éléments spécifiques internes, il peut s'agir notamment d'un élément conique positionné au-dessus de la conduite d'admission prévu dans certaines solutions de l'art antérieur (cf. figure 5b qui sera décrite dans la suite de la description). Un tel élément conique peut en effet casser les flux , ce qui n'est pas nécessairement souhaité, et est sujet à l'érosion.

En variante, la conduite d'admission peut être au moins partiellement interne à l'enceinte. Dans ce cas, la conduite d'admission traverse la paroi inférieure de l'enceinte.

La conduite d'admission selon l'invention comprenant une portion verticale, un coude et l'extrémité d'admission, il peut s'agir de la portion verticale qui traverse la paroi inférieure de l'enceinte. Cette variante permet de se passer de l'élément conique cassant les flux.

Selon un aspect de l'invention, le séparateur de particules peut comprendre entre 1 et 20, de préférence entre 1 et 10 et de manière préférée entre 1 et 4 conduites d'admission.

Avantageusement, le séparateur de particules peut comporter une pluralité de conduites d'admission. Cette configuration permet de favoriser l'homogénéité des flux dans l'enceinte.

Lorsque le séparateur de particules comporte une pluralité de conduites d'admission, les conduites d'admission peuvent de préférence être régulièrement réparties sur la ou les parois latérales de l'enceinte, ou dans l'enceinte, de manière à optimiser l'homogénéité des flux dans l'enceinte.

L'enceinte peut comprendre une entrée d'un gaz de source extérieure permettant la fluidisation de la zone dense.

De préférence, pour réaliser la séparation des particules, la conduite d'admission débouche dans la partie supérieure de l'enceinte, à une hauteur correspondant à la phase diluée au sein de l'enceinte.

Selon un mode de réalisation de l'invention, l'extrémité d'admission peut en outre comprendre une inclinaison d'angle $\varepsilon$ par un plan vertical.

La géométrie du séparateur peut être parallélépipédique, cylindrique ou toute autre géométrie tridimensionnelle.

En général, le matériau utilisé pour réaliser l'enceinte du séparateur peut être choisi parmi les aciers haute température, par exemple de type Hastelloy ®, Incoloy ®, Inconel ® ou Manaurite ®, ou bien encore les céramiques.

Pour limiter les coûts de fabrication, il est également possible de considérer pour les parties externes du séparateur des aciers standards sur lesquels on aura déposé des couches de ciment réfractaire armé (avec des épaisseurs généralement comprises entre 2 et 50 cm, généralement voisines de 20 cm) sur les faces internes exposées à l'écoulement et aux hautes températures. L'utilisation de briques réfractaires est également possible.

Une autre configuration consiste en des parois comportant des tubes dans lesquels circulent un fluide caloporteur, comme par exemple de la vapeur d'eau, qui peuvent également être réalisés avec des aciers standards.

Les particules d'oxydes métalliques, tels que par exemple des oxydes de Fe, Ti, Ni, Cu, Mn, Co, V, sont utilisés seules ou en mélange, et ont une taille moyenne en général supérieure à 50 microns, de préférence comprise entre 100 et 500 microns.

Les oxydes métalliques, synthétiques ou minéraux, supportés ou non, ont en général une masse volumique supérieure à 1200 kg/m$^3$. Par exemple, les particules d'oxyde de nickel supportées sur alumine (NiO/NiAl$_2$O$_4$) présentent généralement une masse volumique de grain comprise entre 2500 et 3500 kg/m$^3$ en fonction de la porosité du support et de la teneur en oxyde de nickel, typiquement de 3200 kg/m$^3$ environ.

L'ilménite, minerai associant le titane et le fer, présente une masse volumique de 4700 kg/m$^3$.

Le séparateur de particules selon la présente invention est avantageusement utilisé pour séparer des particules d'imbrûlés de particules d'oxydes métalliques présentant une masse volumique supérieure à 1200 kg/m$^3$, de préférence supérieure à 2500 kg/m$^3$.

Les particules de transporteur d'oxygène ont en général une taille et une masse volumique bien plus importantes que celles des cendres volantes et des particules d'imbrûlés ayant déjà été au contact des particules transportant l'oxygène dans la zone de combustion à haute température. A titre d'exemple, en sortie de la zone de combustion, on estime que la taille des particules imbrûlées de charbon est inférieure à 100 microns et que la majorité des particules a une taille inférieure à 50 microns. La masse volumique de ces particules est en général comprise entre 1000 et 1500 kg/m$^3$.

D'autres particules comme les cendres volantes résultant de la combustion de la charge solide peuvent également circuler avec le reste des particules et sont caractérisées par une taille de particules et une masse volumique plus faibles que les particules de porteur d'oxygène et souvent plus faibles également que les particules d'imbrûlés.

Les figures 2a à 2d illustrent, schématiquement et de manière non limitative, quatre modes de réalisation de l'invention. Ces figures illustrent uniquement l'enceinte du séparateur de particules 1 et deux conduites d'admission 4.

La figure 2a correspond à un mode de réalisation selon l'invention, pour lequel les deux conduites d'admission 4 sont entièrement externes. Les conduites d'admissions 4 comportent successivement, dans la direction de l'admission, une portion verticale 19, un coude 20 et une extrémité d'admission 21 inclinée d'un angle $\alpha$ par rapport à un plan horizontal H. L'extrémité d'admission 21 débouche sur une paroi latérale de l'enceinte. Pour ce mode de réalisation, la portion verticale 19, le coude 20 et l'extrémité d'admission 21 sont entièrement externes à l'enceinte.

La figure 2b correspond à un mode de réalisation selon l'invention, pour lequel les deux conduites d'admission 4 sont partiellement internes à l'enceinte du séparateur de particules 1. Les conduites d'admissions 4 comportent successivement, dans la direction de l'admission, une portion verticale 19, un coude 20 et une extrémité d'admission 21 inclinée d'un angle α par rapport à un plan horizontal H. La portion verticale 19 traverse la paroi inférieure de l'enceinte. Pour ce mode de réalisation, une partie de la portion verticale 19, le coude 20 et l'extrémité d'admission 21 sont internes à l'enceinte.

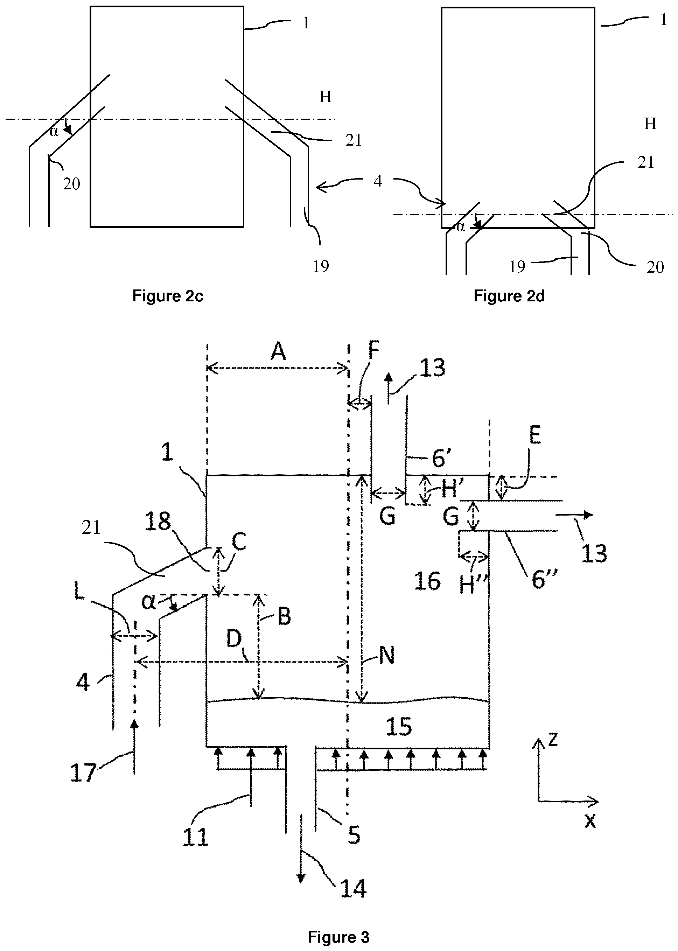

La figure 2c correspond à un mode de réalisation selon l'invention, pour lequel les deux conduites d'admission 4 sont partiellement internes à l'enceinte du séparateur de particules 1. Les conduites d'admissions 4 comportent successivement, dans la direction de l'admission, une portion verticale 19, un coude 20 et une extrémité d'admission 21 inclinée d'un angle α par rapport à un plan horizontal H. L'extrémité d'admission 21 traverse la paroi latérale de l'enceinte. Pour ce mode de réalisation, la portion verticale 19, le coude 20, et une portion de l'extrémité d'admission 21 sont externes à l'enceinte, alors qu'une autre portion de l'extrémité d'admission 21 est interne à l'enceinte.

La figure 2d correspond à un mode de réalisation selon l'invention, pour lequel les deux conduites d'admission 4 sont partiellement internes à l'enceinte du séparateur de particules 1. Les conduites d'admissions 4 comportent successivement, dans la direction de l'admission, une portion verticale 19, un coude 20 et une extrémité d'admission 21 inclinée d'un angle α par rapport à un plan horizontal H. L'extrémité d'admission traverse la paroi inférieure de l'enceinte. Pour ce mode de réalisation, la portion verticale 19, le coude 20 et une portion de l'extrémité d'admission 21 sont externes à l'enceinte, alors qu'une autre portion de l'extrémité d'admission 21 est interne à l'enceinte.

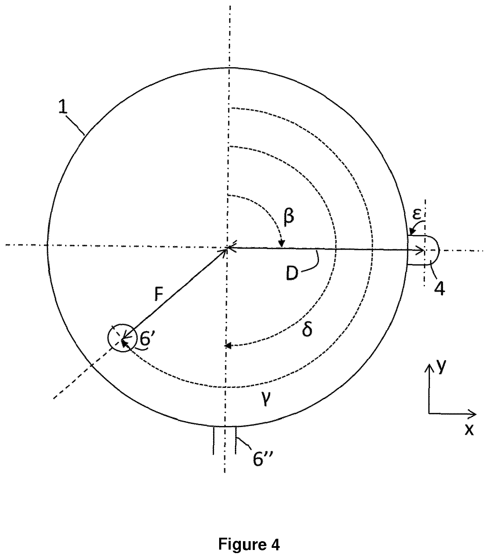

Les figures 3 et 4 illustrent, schématiquement et de manière non limitative, un séparateur de particules selon un mode de réalisation de l'invention. La figure 3 est une coupe longitudinale dans un plan (xz) du séparateur de particules 1 et la figure 4 est une vue de dessus du séparateur de particules 1 dans un plan (xy). Les axes x et y définissent un plan horizontal, l'axe z correspond à l'axe vertical (en l'occurrence l'axe longitudinal de l'enceinte du séparateur de particules)

Ces deux figures sont paramétrées de manière à définir certaines dimensions caractéristiques du séparateur de particules 1.

Ces deux figures détaillent les caractéristiques de la (ou des) alimentation(s) en fumées de combustion chargées en particules solides 17 entrant dans le séparateur de particules 1 par la (ou les) conduite(s) d'admission (pour simplifier les figures, seule une conduite d'admission 4 est représentée). Elles présentent aussi la (ou les) sortie(s) de gaz chargé en imbrulés de combustible solide et cendres 13 du séparateur de particules 1 par la (ou les) conduite(s) de sortie 6. Pour ce mode de réalisation, le séparateur de particules 1 est cylindrique de diamètre 2A. En variante, le séparateur de particules 1 peut aussi être de section rectangulaire, ou toute forme analogue, et on note alors A la distance entre l'axe central/longitudinal de l'enceinte et une paroi latérale de l'enceinte.

Le nombre de conduite d'admission 4 et de conduites de sortie 6 peut être compris entre 1 et 20, de préférence entre 1 et 10 et de manière préférée entre 1 et 4. Les conduites 4 et 6 ont respectivement des diamètres notés L et G. La vitesse superficielle de gaz dans les conduites 4 et 6 est comprise entre 2 m/s et 30 m/s, de préférence entre 3 m/s et 25 m/s et de manière préférée entre 4 m/s et 15 m/s.

Conformément au fonctionnement illustré en rapport à la figure 1, le mélange gaz/solide 17 entrant par la (ou les) conduites d'admission 4 dans le séparateur de particules 1 provient de la zone de combustion 2. Cette zone de combustion est alimentée par le transporteur d'oxygène provenant d'une zone d'oxydation 8, les particules de combustible solide 7 et un gaz de fluidisation 12. La réaction du combustible solide avec le transporteur d'oxygène, ainsi que le gaz de fluidisation, produisent des fumées de combustion comportant des particules d'oxyde métallique, des imbrûlés et des cendres volantes qui sont transportées vers le séparateur de particules 1 par l'intermédiaire de la (ou les) conduite(s) d'admission 4.

La suspension débouche dans le séparateur de particules 1 par la conduite d'admission 4 dans une phase diluée 16 composée essentiellement de gaz (de préférence au moins 95% en volume) dans laquelle la vitesse superficielle peut être contrôlée et représente de 30% à 300 % de la vitesse terminale de chute moyenne des particules transportant l'oxygène. L'ajustement précis de la vitesse superficielle dans la zone 1 permet de contrôler la quantité de particules entraînées vers la conduite de sortie 6. Le flux de particules entraînées dans le séparateur de particules 1 vers la conduite de sortie 6, rapporté à la section du séparateur 1 peut être inférieur à 10 kg/s/m$^2$, est typiquement compris entre 0,02 et 5 kg/s/m$^2$, et peut contenir au moins la moitié des particules imbrûlées entrant par la (ou les) conduite(s) d'admission 4.

Les particules non entraînées vers la ou les conduites de sortie (6', 6") sédimentent dans la phase dense 15 du séparateur de particules 1 et sont collectées dans la partie inférieure du séparateur de particules 1 et évacuées par la conduite d'évacuation 5, formant un flux dense de particules 14, vers une autre zone réactionnelle pour faire une combustion additionnelle ou pour ré-oxyder les particules transportant l'oxygène. Il est possible de former une phase dense 15 fluidisée à la base du séparateur de particules 1. Dans ce cas, la fluidisation de la phase dense 15 peut être effectuée par appoint d'un gaz externe 11 dans le séparateur de particules 1. Ce gaz traverse la séparateur de particules et participe au processus physique de séparation des particules par élutriation dans la phase diluée 16 avant de sortir par la conduite de sortie 6. La distance entre le haut du séparateur de particules 1 et le haut de la phase dense 15 est notée N. Selon un mode de réalisation de l'invention, N est compris entre 2A et 40A, de préférence entre 2A est 30A et de manière préférée entre 2A et 20A.

Les conduites d'admission 4 se situent à une distance D du centre du séparateur de particules. Par exemple, la distance D peut correspondre à la distance entre l'axe de la portion verticale des conduites d'admission 4 et de l'axe du centre du séparateur de particules. Conformément à une mise en oeuvre de l'invention, la distance D est strictement positive et peut être comprise entre 0 et 4A, de préférence entre 0 et 2 A et de manière préférée entre 0 et 1,5A.

Les conduites d'admission 4 débouchent dans la partie diluée 16 de l'enceinte grâce à une fenêtre 18 de diamètre C. Selon un aspect de l'invention, le diamètre C est compris entre 0,5 L et 4L, de préférence entre 1L et 3L et de manière préférée entre 1L et 2L, L étant le diamètre de la portion verticale de la conduite d'admission. L'élargissement de l'extrémité de la conduite d'admission 21 permet d'avoir une vitesse gaz moins importante que celle dans la conduite d'admission 4. Ainsi on peut utiliser une vitesse importante dans la conduite d'admission 4 (réduction de la perte de charge liée à l'accélération des particules) et diminuer la vitesse gaz d'introduction dans le séparateur 1 ce qui permet d'éviter les jets de gaz, et ce qui améliore la répartition dans la phase diluée 16.

La connexion entre la partie verticale de la conduite d'admission 4 et la fenêtre de diamètre C est effectuée grâce à un coude d'angle $\alpha$ dans le plan (xz) et optionnellement d'angle $\varepsilon$ dans le plan (xy). L'angle $\alpha$ est compris entre 1° et 89°, de préférence entre 10° et 70° et de manière préférée entre 30° et 50°. L'angle $\varepsilon$ est compris entre 0° et 360°.

De plus, l'angle $\beta$ définit l'orientation dans le plan (xy) de la conduite d'admission 4 par rapport à l'axe y. L'angle $\beta$ est compris entre 0° et 360°.

La position du bas de la fenêtre 18 est fixée à une distance B de la zone dense 15 (limite de la zone dense 15 et de la zone diluée 16). Cette distance B est comprise entre 0 et N-C, de préférence entre 0,1(N-C) et 0,9(N-C) et de manière préférée entre 0,2(N-C) et 0,8(N-C). Ainsi, cette conception permet d'éviter que les particules dans la partie dense ne soient entraînées par le gaz qui arrive avec une vitesse plus élevée.

Sur ces figures, deux types de conduites de sortie 6 sont identifiés avec les conduites 6' situées sur la paroi supérieure du séparateur de particules 1 et les conduites 6" situées sur la paroi latérale du séparateur de particules 1. Les conduites 6' sont situées à une distance F du centre du séparateur de particules 1. F peut être compris entre 0 et A.

Dans le plan (xy), y définit l'angle entre l'axe y et la position de la conduite de sortie 6' située en paroi supérieure du séparateur 1. L'angle y peut être compris entre 0° et 360°.

Les conduites 6" sont situées à une distance E de la paroi supérieure du séparateur de particules 1. La distance E est comprise entre 0 et N.

Dans le plan (xy), $\delta$ définit l'angle entre l'axe y et la position de la conduite de sortie 6' située en partie latérale du séparateur 1. L'angle $\delta$ est compris entre 0° et 360°.

Une partie des conduites 6' et 6" peut pénétrer dans la zone diluée 16 du séparateur de particules 1. La longueur H' de pénétration des conduites 6' est comprise entre 0 et N, de préférence comprise entre 0 et 0,5N et de manière préférée comprise entre 0 et 0,2N. La longueur H" de pénétration des conduites 6" est comprise entre 0 et A, de préférence comprise entre 0 et 0,5A et de manière préférée comprise entre 0 et 0,2A.

Selon un exemple de réalisation, un interne peut équiper le séparateur de particules 1 dans la phase diluée 16 avant la sortie 13. Cet interne permet d'améliorer la séparation.

Le procédé de combustion en boucle chimique selon l'invention met en oeuvre le dispositif de combustion en boucle chimique selon l'un quelconque des modes de réalisation décrits ci-dessus ou l'une quelconque des combinaisons desdits modes. Pour ce procédé, on met en oeuvre les étapes suivantes :

a) on admet un mélange gazeux provenant de ladite zone de combustion, comprenant des particules d'imbrûlés, des particules de porteur d'oxygène et des gaz de combustion, dans l'enceinte du séparateur de particules au moyen d'au moins une conduite d'admission, la conduite d'admission comprend au moins une extrémité d'admission inclinée par rapport à un plan horizontal ;

b) on extrait les particules les plus légères constituées majoritairement des particules d'imbrûlés par une sortie en partie supérieure de l'enceinte du séparateur de particules et on évacue les particules les plus lourdes constituées majoritairement des particules de porteur d'oxygène par la conduite d'évacuation en partie inférieure de l'enceinte ;

c) on envoie un flux gazeux comportant les particules les plus légères extraites par la conduite de sortie en partie supérieure de l'enceinte vers le séparateur gaz-solide ;

d) on évacue du séparateur gaz-solide un gaz appauvri en particules d'imbrûlés par une conduite ; et

e) on recycle les particules d'imbrûlés séparées dans le séparateur gaz-solide vers la zone de combustion par une conduite de communication, procédé dans lequel

ladite conduite d'admission comprend successivement, dans la direction de l'admission, une portion verticale, un coude et une extrémité d'admission inclinée, ladite une extrémité d'admission étant inclinée d'un angle $\alpha$ par rapport à un plan horizontal et, ladite extrémité d'admission débouchant au sein de ladite enceinte.

Exemple comparatif

Les caractéristiques et avantages du dispositif et du procédé selon l'invention apparaîtront plus clairement à la lecture des exemples comparatifs ci-après.

Trois dispositifs de séparation de particules ont été étudiés par simulations CFD (Computational Fluid Dynamics), ces trois dispositifs sont illustrés dans la partie haute des figures 5a à 5c :

- Premier dispositif (figure 5a) : selon l'art antérieur (tel que décrit dans la demande de brevet WO 2011/151537) avec une conduite d'admission 4 entrant par le bas du séparateur de particules 1 et centrée dans le séparateur.
- Deuxièmement dispositif (figure 5b) : selon l'art antérieur (selon un perfectionnement de la solution décrite dans la demande de brevet WO 2011/151535 A2) avec une conduite d'admission 4 entrant par le bas du séparateur de particules 1, centrée dans le séparateur, et avec l'implémentation d'un cône 22 au sommet de cette conduite.
- Troisièmement dispositif (figure 5c) : selon l'invention, en particulier selon le mode de réalisation de la figure 2a.

Les simulations CFD ont été effectuées avec le logiciel FLUENT. Premièrement, seule la phase gaz dans la/les conduite(s) d'admission 4 et la partie diluée 16 est simulée. Dans un deuxième temps, des particules de types légères (cendres ou particules d'imbrûlés) et lourdes (porteur d'oxygène) sont injectées dans la simulation avec une approche DPM (Discrète Particule Method) où seul le gaz interagit avec les particules à travers une force de traînée. Dans cette approche, les particules n'ont pas d'effet sur le champ de vitesse gaz. Cette hypothèse est utilisée car l'écoulement gaz/particules est considéré dilué avec un pourcentage volumique de particules inférieur à 1%vol. Les particules sont injectées en entrée de la/les conduite(s) d'admission 4 et peuvent sortir soit par la conduite de sortie 6' soit par le bas de la phase diluée 16 par une conduite de sortie 6" (non représentée). Le pourcentage de particules sortant par la conduite de sortie 6' en haut du séparateur 1 est défini par une formule du type :

$$\eta = \frac{D\acute{e}bit\ Particules\ sortant\ par\ la\ conduite\ (6')}{D\acute{e}bit\ particules\ inject\acute{e}\ dans\ (4)}$$

Le tableau 1 présente les conditions simulées ainsi que les dimensions utilisées (en référence aux dimensions illustrées aux figures 3 et 4).

Tableau 1 - caractéristiques du séparateur de particules

| | 1er dispositif (Art antérieur) | 2ème dispositif (Art antérieur) | 3ème dispositif (invention) |
|---|---|---|---|
| Longueur A (m) | 2 | | |
| Longueur N (m) | 10 | | |
| Nombre de conduites d'admission | 1 | 1 | 2 |
| Diamètre L (m) | 1.5 | 1.5 | 1.06 |
| Longueur B (m) | 1 | | |
| Longueur D (m) | 0 | 0 | 2.5 |
| Angle $\alpha$ (°) | - | - | 45 |
| Diamètre C (m) | - | - | 1.06 |
| Angle $\beta$ (°) | - | - | Conduite 1 : 90° |
| | | | Conduite 2 : 270° |
| Angle $\varepsilon$ (°) | - | - | 90° |
| Diamètre cône (m) | - | 1.06 | |
| Nombre de conduite (6') | 1 | | |
| Longueur F (m) | 0 | | |
| Diamètre G (m) | 1.4 | | |
| Longueur H' (m) | 0 | | |

(suite)

| | 1er dispositif (Art antérieur) | 2ème dispositif (Art antérieur) | 3ème dispositif (invention) |
|---|---|---|---|
| Masse volumique gaz (kg/m$^3$) | 0.33 | | |
| Viscosité gaz (kg/m/s) | 4.6 10$^{-5}$ | | |
| Débit massique gaz injecté dans (4) (kg/s) | 4 | 4 | Conduite 1 : 2 |
| | | | Conduite 2 : 2 |
| Débit massique gaz (11) (kg/s) | 1.1 | | |
| Débit massique particules lourdes injectées (kg/s) | 60 | | |
| Masse volumique particules lourdes (kg/m$^3$) | 3300 | | |
| Diamètre moyen particules lourdes ($\mu$m) | 200 | | |
| Débit massique particules légères injectées (kg/s) | 0.6 | | |
| Masse volumique particules légères (kg/m$^3$) | 1000 | | |
| Diamètre moyen particules lourdes ($\mu$m) | 50 | | |

La partie basse des figures 5a à 5c illustrent le profil de vitesse du gaz à une hauteur de 6 m dans le séparateur de particules. Sur ces figures, les nuances de gris correspondent au gradient de vitesse de gaz dans le séparateur de particules, les zones les plus foncées correspondant aux zones pour lesquelles la vitesse de gaz est la plus élevée, et les zones les plus claires correspondant aux zones pour lesquelles la vitesse de gaz est la plus basse. On observe que l'invention permet de limiter le gradient de vitesse dans le séparateur de particules, et permet une meilleure homogénéité du gaz dans le séparateur de particules.

Le tableau 2 présente les pourcentages de particules lourdes et légères sortant par la conduite de sortie supérieure du séparateur de particules 1.

Tableau 2 - comparaison

| | Premier dispositif (art antérieur) | Deuxième dispositif (art antérieur) | Troisième dispositif (invention) |
|---|---|---|---|
| $\eta$ (particules légères) | 100% | 100% | 100% |
| $\eta$ (particules lourdes) | 20% | 5% | 1% |

Le tableau 2 permet de montrer que l'invention permet d'obtenir une meilleure séparation entre les particules légères et lourdes avec seulement 1% des particules lourdes sortant par le haut du dispositif.

## Revendications

1. Dispositif de combustion en boucle chimique utilisant un combustible solide générant des particules d'imbrûlés et mettant en oeuvre des particules de porteur d'oxygène, telles que des oxydes métalliques, et comportant au moins une zone de combustion (2), un séparateur de particules (1) contenues dans un mélange gazeux provenant de ladite zone de combustion (2), et un séparateur gaz-solide (3), ledit séparateur de particules (1) comprenant une enceinte munie d'au moins une conduite d'admission (4) reliée à ladite zone de combustion (2), au moins une conduite d'évacuation (5) située en partie inférieure de ladite enceinte et au moins une conduite de sortie (6) située en partie supérieure de ladite enceinte et reliée audit séparateur gaz-solide (3), ladite enceinte étant apte à comprendre une phase dense (15) en partie inférieure et une phase diluée (16) en partie supérieure, ladite conduite d'admission (4) comprenant successivement, dans la direction de l'admission, une portion verticale (19), un coude (20) et une extrémité d'admission inclinée (21), ladite extrémité d'admission (21) étant inclinée d'un angle $\alpha$ par rapport à un plan horizontal (H) et débouchant au sein de ladite enceinte.

2. Dispositif de combustion selon la revendication 1, dans lequel ledit angle $\alpha$ est compris entre 10 et 70°, de préférence entre 30 et 50°.

3. Dispositif de combustion selon l'une des revendications précédentes, dans lequel ladite portion verticale (19) de ladite conduite d'admission (4) est à une distance D du centre de ladite enceinte strictement positive et inférieure à 4A, de préférence inférieure à 2A et de manière préférée inférieure à 1,5 A, A étant une dimension entre le centre de ladite enceinte et une paroi latérale de ladite enceinte.

4. Dispositif de combustion selon l'une des revendications précédentes, dans lequel le diamètre C de ladite extrémité d'admission (21) inclinée est compris entre 0,5 et 4L, de préférence entre 1L et 3L, de manière préférée entre 1L et 2 L, L étant le diamètre de ladite portion verticale (19) de ladite conduite d'admission.

5. Dispositif de combustion selon l'une des revendications précédentes, dans lequel ladite conduite d'admission (4) est entièrement externe à ladite enceinte, l'extrémité d'admission (21) débouchant sur une paroi latérale de ladite enceinte.

6. Dispositif de combustion selon l'une des revendications 1 à 4, dans lequel ladite conduite d'admission (4) est au moins partiellement interne à ladite enceinte, ladite conduite d'admission (4) traversant la paroi inférieure de ladite enceinte.

7. Dispositif de combustion selon l'une des revendications précédentes, dans lequel ledit séparateur de particules (1) comprend entre 1 et 20, de préférence entre 1 et 10, et de manière préférée entre 1 et 4 conduites d'admission (4).

8. Dispositif de combustion selon l'une des revendications précédentes, dans lequel ladite conduite d'admission (4) débouche dans ladite enceinte dans la partie supérieure de ladite enceinte apte à comprendre ladite phase diluée (16).

9. Dispositif de combustion selon l'une des revendications précédentes, dans lequel l'inclinaison de ladite extrémité d'admission (21) de ladite conduite d'admission (4) est dirigée vers l'axe longitudinal de ladite enceinte.

10. Procédé de combustion en boucle chimique utilisant un combustible solide générant des particules d'imbrulés, mettant en oeuvre des particules de porteur d'oxygène, telles que des oxydes métalliques, mettant en oeuvre un dispositif de combustion en boucle chimique selon l'une des revendications précédentes, et mettant en oeuvre les étapes suivantes :

a) on admet un mélange gazeux provenant de ladite zone de combustion (2), comprenant des particules et des gaz de combustion, dans l'enceinte dudit séparateur de particules (1) au moyen d'au moins une conduite d'admission (4) ;
b) on extrait les particules les plus légères constituées majoritairement des particules d'imbrûlés par une sortie en partie supérieure de ladite enceinte et on évacue les particules les plus lourdes constituées majoritairement des particules de porteur d'oxygène par ladite conduite d'évacuation (5) en partie inférieure de ladite enceinte ;
c) on envoie un flux gazeux comportant les particules légères d'imbrulés extraites par ladite conduite de sortie (6) en partie supérieure de l'enceinte vers ledit séparateur gaz-solide (3) ;
d) on évacue dudit séparateur gaz-solide (3) un gaz appauvri en particules d'imbrûlés par une conduite (10) ; et
e) on recycle les particules d'imbrûlés séparées dans ledit séparateur gaz-solide (3) vers ladite zone de combustion (2) par une conduite de communication (9), procédé dans lequel ladite conduite d'admission (4) comprend successivement, dans la direction de l'admission, une portion verticale (19), un coude (20) et une extrémité d'admission inclinée (21), ladite une extrémité d'admission (21) étant inclinée d'un angle $\alpha$ par rapport à un plan horizontal (H) et, ladite extrémité d'admission (21) débouchant au sein de ladite enceinte.

**Patentansprüche**

1. Vorrichtung zur Chemical-Looping-Verbrennung, bei der ein Festbrennstoff genutzt wird, der unverbrannte Partikel erzeugt, und Sauerstoffträgerpartikel wie etwa Metalloxide zum Einsatz kommen, und die wenigstens einen Verbrennungsbereich (2), einen Abscheider (1) für Partikel, die in einem Gasgemisch enthalten sind, das aus dem Verbrennungsbereich (2) kommt, und einen Gas-Feststoff-Abscheider (3) aufweist, wobei der Partikelabscheider (1) ein Gehäuse, das mit wenigstens einer Einlassleitung (4) versehen ist, die mit dem Verbrennungsbereich (2) verbunden ist, wenigstens eine Ablassleitung (5), die sich im unteren Abschnitt des Gehäuses befindet, und wenigstens eine Auslassleitung (6), die sich im oberen Abschnitt des Gehäuses befindet und mit dem Gas-Feststoff-Abscheider (3) verbunden ist, umfasst, wobei das Gehäuse geeignet ist, eine dichte Phase (15) im unteren Abschnitt und eine verdünnte Phase (16) im oberen Abschnitt zu umfassen, wobei die Einlassleitung (4) aufeinanderfolgend in der Einlassrichtung ein vertikales Teilstück (19), einen Bogen (20) und ein geneigtes Einlassende (21) umfasst, wobei das Einlassende (21) um einen Winkel $\alpha$ im Verhältnis zu einer horizontalen Ebene (H) geneigt ist und im Inneren des Gehäuses mündet.

2. Verbrennungsvorrichtung nach Anspruch 1, wobei der Winkel $\alpha$ zwischen 10 und 70°, vorzugsweise zwischen 30 und 50° beträgt.

3. Verbrennungsvorrichtung nach einem der vorhergehenden Ansprüche, wobei sich das vertikale Teilstück (19) der Einlassleitung (4) in einem Abstand D zum Mittelpunkt des Gehäuses befindet, der streng positiv und kleiner als 4A ist, vorzugsweise kleiner als 2A und bevorzugt kleiner als 1,5 A ist, wobei A eine Abmessung zwischen dem Mittelpunkt des Gehäuses und einer Seitenwand des Gehäuses ist.

4. Verbrennungsvorrichtung nach einem der vorhergehenden Ansprüche, wobei der Durchmesser C des geneigten Einlassendes (21) zwischen 0,5 und 4L beträgt, vorzugsweise zwischen 1L und 3L, bevorzugt zwischen 1L und 2, wobei L der Durchmesser des vertikalen Teilstücks (19) der Einlassleitung ist.

5. Verbrennungsvorrichtung nach einem der vorhergehenden Ansprüche, wobei sich die Einlassleitung (4) vollständig außerhalb des Gehäuses befindet, wobei das Einlassende (21) an einer Seitenwand des Gehäuses mündet.

6. Verbrennungsvorrichtung nach einem der Ansprüche 1 bis 4, wobei sich die Einlassleitung (4) wenigstens teilweise innerhalb des Gehäuses befindet, wobei die Einlassleitung (4) die untere Wand des Gehäuses durchquert.

7. Verbrennungsvorrichtung nach einem der vorhergehenden Ansprüche, wobei der Partikelabscheider (1) zwischen 1 und 20, vorzugsweise zwischen 1 und 10 und bevorzugt zwischen 1 und 4 Einlassleitungen (4) umfasst.

8. Verbrennungsvorrichtung nach einem der vorhergehenden Ansprüche, wobei die Einlassleitung (4) im Gehäuse im oberen Abschnitt des Gehäuses mündet, der geeignet ist, die verdünnte Phase (16) zu umfassen.

9. Verbrennungsvorrichtung nach einem der vorhergehenden Ansprüche, wobei die Neigung des Einlassendes (21) der Einlassleitung (4) zur Längsachse des Gehäuses hin gerichtet ist.

10. Verfahren zur Chemical-Looping-Verbrennung, bei dem ein Festbrennstoff genutzt wird, der unverbrannte Partikel erzeugt, Sauerstoffträgerpartikel wie etwa Metalloxide zum Einsatz kommen, wobei eine Vorrichtung zur Chemical-Looping-Verbrennung nach einem der vorhergehenden Ansprüche zum Einsatz kommt und die folgenden Schritte durchgeführt werden:

    a) ein Gasgemisch, das aus dem Verbrennungsbereich (2) kommt, das Partikel und Verbrennungsgase umfasst, wird in das Gehäuse des Partikelabscheiders (1) mittels wenigstens einer Einlassleitung (4) eingelassen;
    b) die leichtesten Partikel, die mehrheitlich von den unverbrannten Partikeln gebildet sind, werden durch einen Auslass im oberen Abschnitt des Gehäuses extrahiert, und die schwersten Partikel, die mehrheitlich von den Sauerstoffträgerpartikeln gebildet sind, werden durch die Ablassleitung (5) im unteren Abschnitt des Gehäuses abgelassen;
    c) ein Gasstrom mit den leichten, unverbrannten Partikeln, die durch die Auslassleitung (6) im oberen Abschnitt des Gehäuses extrahiert wurden, wird zum Gas-Feststoff-Abscheider (3) geschickt;
    d) ein Gas, das mit unverbrannten Partikeln abgereichert ist, wird über eine Leitung (10) aus dem Gas-Feststoff-Abscheider (3) abgelassen; und
    e) die unverbrannten Partikel, die im Gas-Feststoff-Abscheider (3) abgeschieden werden, werden durch eine Verbindungsleitung (9) wieder dem Verbrennungsbereich (2) zugeführt,

wobei bei dem Verfahren die Einlassleitung (4) aufeinanderfolgend in der Einlassrichtung ein vertikales Teilstück (19), einen Bogen (20) und ein geneigtes Einlassende (21) umfasst, wobei das eine Einlassende (21) um einen Winkel α im Verhältnis zu einer horizontalen Ebene (H) geneigt ist, wobei das Einlassende (21) im Inneren des Gehäuses mündet.

**Claims**

1. Device for chemical looping combustion using a solid fuel generating unburnt particles and employing oxygen carrier particles, such as metal oxides, and comprising at least a combustion zone (2), a separator (1) for particles contained in a gas mixture from said combustion zone (2), and a gas-solid separator (3), said particle separator (1) comprising a chamber equipped with at least one intake duct (4) connected to said combustion zone (2), at least one discharge duct (5) situated in the lower part of said chamber, and at least one outlet duct (6) situated in the upper part of said chamber and connected to said gas-solid separator (3), said chamber being able to comprise a dense phase (15) in the lower part and a dilute phase (16) in the upper part, said intake duct (4) comprising successively, in the intake direction, a vertical portion (19), an elbow (20) and an inclined intake end (21), said intake end (21) being inclined by an angle α with respect to a horizontal plane (H) and opening out within said chamber.

2. Combustion device according to Claim 1, wherein said angle α is between 10 and 70°, preferably between 30 and 50°.

3. Combustion device according to either of the preceding claims, wherein said vertical portion (19) of said intake duct (4) is at a distance D from the centre of said chamber, D being strictly positive and less than 4 A, preferably less than 2 A and more preferably less than 1.5 A, where A is a dimension between the centre of said chamber and a side wall of said chamber.

4. Combustion device according to any of the preceding claims, wherein the diameter C of said inclined intake end (21) is between 0.5 and 4 L, preferably between 1 L and 3 L, more preferably between 1 L and 2 L, where L is the diameter of said vertical portion (19) of said intake duct.

5. Combustion device according to any of the preceding claims, wherein said intake duct (4) is entirely external to said chamber, the intake end (21) opening out on a side wall of said chamber.

6. Combustion device according to any of Claims 1 to 4, wherein said intake duct (4) is at least partly internal to said chamber, said intake duct (4) passing through the lower wall of said chamber.

7. Combustion device according to any of the preceding claims, wherein said particle separator (1) comprises between 1 and 20, preferably between 1 and 10 and more preferably between 1 and 4, intake ducts (4).

8. Combustion device according to any of the preceding claims, wherein said intake duct (4) opens out in said chamber, in the upper part of said chamber able to comprise said dilute phase (16).

9. Combustion device according to any of the preceding claims, wherein the inclination of said intake end (21) of said intake duct (4) is directed toward the longitudinal axis of said chamber.

10. Method for chemical looping combustion using a solid fuel generating unburnt particles, employing oxygen carrier particles, such as metal oxides, employing a device for chemical looping combustion according to any of the preceding claims, and implementing the following steps:

    a) a gaseous mixture from said combustion zone (2), comprising particles and combustion gases, is admitted to the chamber of said particle separator (1) by means of at least one intake duct (4);
    b) the lightest particles, consisting predominantly of the unburnt particles, are extracted via an outlet in the upper part of said chamber, and the heaviest particles, consisting predominantly of the oxygen carrier particles, are discharged via said discharge duct (5) in the lower part of said chamber;
    c) a gaseous stream comprising the light unburnt particles extracted via said outlet duct (6) in the upper part of the chamber are sent to said gas-solid separator (3);
    d) a gas depleted in unburnt particles is discharged from said gas-solid separator (3) via a duct (10); and
    e) the unburnt particles separated in said gas-solid separator (3) are recycled to said combustion zone (2) via a communication duct (9);

in this method, said intake duct (4) comprises successively, in the intake direction, a vertical portion (19), an elbow (20) and an inclined intake end (21), said one intake end (21) being inclined by an angle $\alpha$ with respect to a horizontal plane (H), and said intake end (21) opening out within said chamber.

Figure 1

Figure 2a

Figure 2 b

**Figure 2c**

**Figure 2d**

**Figure 3**

Figure 4

Figure 5a

Figure 5b

Figure 5c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2850156
- FR 2896709 A
- FR 2896709
- FR 2960941
- WO 2011151537 A
- WO 2011151535 A2